# EUROPÄISCHE PATENTSCHRIFT

(11) **EP 2 940 974 B1**
(45) Veröffentlichungstag und Bekanntmachung des Hinweises auf die Patenterteilung: **11.01.2017**
(21) Anmeldenummer: 14166403.7
(22) Anmeldetag: 29.04.2014
(51) Int. Cl.: H04M 1/23, G06F 3/02

(54) **HANDGERÄT ZUR DATENEINGABE SOWIE FERNBEDIENUNGSGERÄT, MOBILTELEFON UND SPIELGERÄT**
HANDHELD DEVICE FOR DATA INPUT AS WELL AS REMOTE CONTROLLER, MOBILE PHONE AND GAMING DEVICE.
DISPOSITIF PORTABLE POUR UNE SAISIE DE DONNÉES AINSI QUE LA TÉLÉCOMMANDE, TÉLÉPHONE MOBILE ET CONSOLE DE JEU.

(43) Veröffentlichungstag der Anmeldung: 04.11.2015
(73) Patentinhaber: Röhm, Valentin, 80637 München (DE)
(72) Erfinder: Röhm, Valentin, 80637 München (DE)
(74) Vertreter: PATERIS Patentanwälte PartmbB

(56) Entgegenhaltungen:
- WO-A1-89/03569
- DE-A1-102004 042 884
- US-B1- 6 762 749

## Beschreibung

Die Erfindung betrifft ein Handgerät zur Dateneingabe sowie ein Fernbedienungsgerät, ein Mobiltelefon und ein Spielgerät, die das Handgerät aufweisen.

Mobile elektronische Handgeräte zur Dateneingabe sind für diverse Anwendungen bekannt. Ein Mobiltelefon weist beispielsweise eine Tastatur oder einen Touchscreen auf, mit denen Telefonnummern, Mitteilungen oder Dateneintragungen in das Mobiltelefon eingegeben werden können. Ein Fernbedienungsgerät für beispielsweise einen Fernsehapparat oder eine Stereoanlage weist diverse Programm- und Funktionstasten auf, die als Drucktasten oder Folientasten in das Fernbedienungsgerät eingebaut sind. An die Handgeräte sind die Forderungen gestellt, dass sie möglichst klein, handlich und bequem bedienbar sein sollen. Problematisch ist jedoch, dass Handgeräte mit geringer Baugröße zwar handlich in der Unterbringung, jedoch schwierig in der Bedienung und der manuellen Handhabung sind. Außerdem ist es wünschenswert, dass Handgeräte für die menschliche Hand möglichst ergonomisch gestaltet sind, wobei die Beweglichkeit der Finger und des Daumens zu berücksichtigen sind. Bei der häufigen und schnellen Bedienung des Handgeräts kann es jedoch zu Verspannungen in der Hand, im Arm und im Nacken des Bedieners kommen. Diese Verspannungen können die Beweglichkeit beeinträchtigen und zu Schmerzen führen, wodurch sich ein Unwohlsein und sogar ein Handicap beim Bediener einstellen kann. Dadurch kann neben der körperlichen Gesundheit auch die Psyche des Bedieners beeinträchtigt sein, wodurch eventuell Entscheidungen des Bedieners bei der Bedienung des Handgeräts beeinflusst werden können.

DE 10 2004 042 884 A1 beschreibt ein Kommunikationsgerät für taubblinde Personen zur Übermittlung und zum Empfang von Informationen. US 6,762,749 B1 beschreibt ein elektronisches Datenanzeigesystem. WO 89/03569 beschreibt eine von Hand gehaltene Kommunikationseinrichtung, die durch Fingerbewegung betätigt wird.

Aufgabe der Erfindung ist es, ein Handgerät zur Dateneingabe sowie ein Fernbedienungsgerät, ein Mobiltelefon und ein Spielgerät, die das Handgerät aufweisen, zu schaffen, wobei mit den Geräten eine schnelle und bequeme Dateneingabe ermöglicht ist, bei der die das Handgerät bedienende Person entspannt ist und sich wohl fühlt.

Das erfindungsgemäße Handgerät zur Dateneingabe weist eine Datenverarbeitungseinheit und ein Gehäuse, das ergonomisch zum in einer Hand halten in der Art eines Handschmeichlers an die Hand angepasst geformt ist, sowie mindestens eine Eingabetaste auf, die mit der Datenverarbeitungseinheit zur Verarbeitung der Dateneingabe durch die Eingabetaste gekoppelt ist und derart an dem Gehäuse angeordnet ist, dass, wenn das Handgerät in der Hand gehalten ist, von mindestens einem der vier Finger oder dem Daumen der Hand die Eingabetaste zur Dateneingabe drückbar und dadurch eine Druckkraft von dem Finger oder dem Daumen via das Handgerät auf die Handfläche übertragbar ist, wobei eine Oberflächenstelle des Gehäuses, die der Eingabetaste abgewandt angeordnet ist und zu der, wenn das Handgerät in der Hand gehalten ist, unmittelbar benachbart mindestens eine der Reflektionszonen der Handfläche angeordnet ist, mit mindestens einem von der Oberflächenstelle vorstehenden Reizvorsprung versehen ist, so dass vom Drücken der Eingabetaste via den Reizvorsprung Nervenendpunkte der Reflexzone reizbar sind, durch der der Reflexzone zugeordnete Körperteil während der Dateneingabe stimuliert ist.

Auf der Handfläche befinden sich Reflexzonen, die beispielsweise dem Solarplexus, dem Magen, der Leber oder der Lunge zugeordnet sind. An den Fingerkuppen befinden sich Reflexzonen, die den Stirn- und Kopfhöhlen zugeordnet sind, und an der Daumenkuppe befindet sich eine Reflexzone, die dem Gehirn zugeordnet ist. Werden bei der Dateneingabe die Nervenendpunkte der Reflexzonen gereizt, so stellt sich eine wohltuende und entspannende Wirkung an den entsprechenden zugeordneten Körperteilen ein, nämlich am Solarplexus, im Magen, in den Stirn- und Kopfhöhlen, im Gehirn, in der Leber und der Lunge. Somit wird während der Dateneingabe und darüber hinaus das Wohlbefinden der Person erhöht, die die Dateneingabe mit dem erfindungsgemäßen Handgerät durchführt. Die Erhöhung des Wohlbefindens führt zu einer Verbesserung der Gesundheit und des psychischen Zustands der Person. Hervorgerufen durch das mit der Dateneingabe mittels des Handgeräts bewirkte Wohlbefinden der Person kann diese zu weitreichenden Gedanken und Ideen inspiriert werden, die in der Art und der Qualität der Dateneingabe einen positiven Niederschlag finden können.

Leidet die Person beispielsweise unter einer Nervosität, die ihr auf den Magen schlägt, kann die Dateneingabe mit dem Handgerät zu einer Beruhigung des Magens führen, wenn mit dem Reizvorsprung die Reflexzonen für den Magen und den Solarplexus gereizt werden. Danach wird mit der Dateneingabe beim Handgerät die Person ruhiger und fühlt sich freier. Dadurch könnte die Person zu kreativen Einfällen geleitet werden.

Das Gehäuse weist bevorzugt mindestens eine einer der Wurzeln der Finger zugeordnete Orientierungsnoppe auf, die derart angeordnet ist, dass, wenn das Handgerät in der Hand gehalten ist, die Orientierungsnoppe mit ihrer zugeordneten Wurzel in Eingriff steht und der Reizvorsprung mit der ihm zugeordneten Reflexzone in Berührkontakt bringbar und die Eingabetaste von dem ihr zugeordneten Finger/Daumen drückbar ist.

Die Orientierungsnoppe ist leicht mit der Wurzel des ihr zugeordneten Fingers in Eingriff zu bringen, wenn das Handgerät in der Art des Handschmeichlers in der Hand gehalten ist. Dadurch sind die Anordnungen der Eingabetaste relativ zu den Fingern bzw. dem Daumen und der Reizvorsprung relativ zur Reflexzone festgelegt. Somit sind die Positionierungen der Eingabetaste relativ zu den Fingern und des Reizvorsprungs relativ zur Reflexzone reproduzierbar, wodurch die Handhabung des Handgeräts erleichtert ist.

Es ist bevorzugt, dass mit der Fingerkuppe/Daumenkuppe des der Eingabetaste zugeordneten Fingers/Daumens die Eingabetaste drückbar ist. Dadurch, dass sich an den Fingerkuppen Reflexzonen für die Stirn- und Kopfhöhlen befinden und an der Daumenkuppe sich die Reflexzone für das Gehirn befindet, wird beim Drücken der Eingabetaste mit der jeweiligen Fingerkuppe/Daumenkuppe die entsprechende Reflexzone gereizt.

Bevorzugtermaßen weist das Gehäuse in der Oberflächenstelle eine Gehäuseöffnung und das Handgerät einen verschiebbar gelagerten Übertragungsstift auf, der mit der Eingabetaste gekoppelt ist, dass, wenn die Eingabetaste gedrückt ist, der Übertragungsstift mit seinem einen Längsende durch die Gehäuseöffnung sich erstreckt und von der Oberflächenstelle vorsteht, wodurch das Längsende den Reizvorsprung bildet. Beim Drücken der Eingabetaste verschiebt sich der Übertragungsstift aus der Gehäuseöffnung heraus und steht mit seinem einen Längsende vom Gehäuse des Handgeräts vor. Dadurch wird insbesondere beim Drücken der Eingabetaste eine besonders intensive Reizung der dem Übertragungsstift zugeordneten Reflexzone vorgenommen, so dass mit Hilfe des Übertragungsstifts eine starke Stimulation des der Reflexzone zugeordneten Körperteils ermöglicht ist.

Außerdem ist bevorzugt durch die Form des Längsendes des Übertragungsstifts und des Grads des Herausfahrens des Übertragungsstifts durch die Gehäuseöffnung die Reizung der dem Übertragungsstift zugeordneten Reflexzone einstellbar. Ist beispielsweise das eine Längsende des Übertragungsstifts als eine Spitze ausgebildet und wird der Übertragungsstift beim Drücken der Eingabetaste vergleichsweise stark herausgefahren, so dass das eine Längsende mit vergleichsweise großem Abstand vom Gehäuse des Handgeräts vorsteht, stellt sich eine vergleichsweise starke Reizung der dem Übertragungsstift zugeordneten Reflexzone ein.

Weiter bevorzugt ist es, dass der Übertragungsstift derart dimensioniert, gelagert und mit der Eingabetaste gekuppelt ist, dass, wenn die Eingabetaste nicht gedrückt ist, das Längsende des Übertragungsstifts in der Gehäuseöffnung versenkt ist. Dadurch ist beim Nichtdrücken der Eingabetaste ein explizites Reizen der dem Übertragungsstift zugeordneten Reflexzone nicht vorgesehen. Umso stärker wird die Reizung der dem Übertragungsstift zugeordneten Reflexzone empfunden, wenn auf die Eingabetaste gedrückt wird und der Übertragungsstift aus der Gehäuseöffnung ausfährt und die dem Übertragungsstift zugeordnete Reflexzone reizt. Durch den starken Wechsel der Reizung der dem Übertragungsstift zugeordneten Reflexzone durch Drücken und Nichtdrücken der Eingabetaste ist die Reizung effektiv und es wird unterbunden, dass sich eine Gewöhnung an die Reizung einstellt.

Die Eingabetaste weist bevorzugtermaßen einen verschiebbaren Tastenkopf zum Drücken der Eingabetaste auf, der in Verlängerung zum Übertragungsstift an diesen befestigt ist, so dass der Tastenkopf zusammen mit dem Übertragungsstift das Gehäuse vollständig durchdringt. Dadurch wird die Drückbewegung des der Eingabetaste zugeordneten Fingers unmittelbar auf die dem Übertragungsstift zugeordnete Reflexzone übertragen. Alternativ ist bevorzugt, dass zwischen dem Übertragungsstift und der Eingabetaste ein Übersetzungsgetriebe, beispielsweise in Form eines schwenkbar gelagerten Hebels mit unterschiedlich langen Schenkeln, geschaltet ist, wodurch der Hub der Eingabetaste auf den Hub des Übertragungsstifts übersetzbar ist. Dadurch ist beispielsweise ein vergleichsweise geringer Hub der Eingabetaste auf einen vergleichsweise großen Hub des Übertragungsstifts übersetzbar.

Der Tastenkopf weist bevorzugt eine Reizspitze auf, die vom Gehäuse absteht, wodurch der Finger/Daumen beim Drücken der Eingabetaste gereizt ist. Dadurch findet eine starke Reizung der Reflexzone an der Fingerkuppe/Daumenkuppe statt. Alternativ ist es bevorzugt, dass die Eingabetaste einen verschiebbaren Tastenkopf zum Drücken der Eingabetaste aufweist und der Übertragungsstift das Gehäuse vollständig durchdringt sowie im Tastenkopf sich erstreckt, so dass, wenn die Eingabetaste gedrückt ist, das Längsende des Übertragungsstifts, das der Gehäuseöffnung abgewandt angeordnet ist, durch eine Tastenkopföffnung des Tastenkopfs sich erstreckt und von dem Tastenkopf vorsteht, wodurch der Finger/Daumen beim Drücken der Eingabetaste gereizt ist. Dadurch fährt das andere Längsende des Übertragungsstifts aus der Tastenkopföffnung heraus und steht beim Drücken der Eingabetaste vom Tastenkopf vor. Somit ist der Übertragungsstift sowohl vom Finger/Daumen und der Handfläche abgestützt, wodurch eine starke Reizung der betroffenen Reflexzonen erzielt ist. Ferner ist bevorzugt, dass der Übertragungsstift unter Überwinden einer Widerstandskraft teleskopartig ineinander verfahrbar ist, wodurch durch die Stärke der Widerstandskraft die Intensitäten der Reizung der betroffenen Reflexzonen einstellbar sind.

Das Handgerät weist ferner bevorzugt ein Vorspannmittel auf, das am Tastenkopf angreift und mit seiner der Druckkraft entgegenwirkenden Vorspannkraft den Tastenkopf in dessen Nichtgedrücktstellung treibt, wobei das Vorspannmittel derart dimensioniert ist, dass die Vorspannkraft zu derjenigen Größe der Druckkraft führt, dass der der Reflexzone zugeordnete Körperteil während der Dateneingabe zur Entspannung, Schmerzlinderung oder Krankheitsheilung stimuliert ist. Dadurch ist die Dimensionierung des Vorspannmittels herangezogen, um für jede betroffene Reflexzone eine individuell ausgewählte Reizung zu erzeugen. Außerdem kann durch die entsprechende Dimensionierung des Vorspannmittels die Reizung personenbezogen eingestellt werden. Ist beispielsweise die Vorspannkraft vergleichsweise stark, ist die Reizung an der Fingerkuppe/Daumenkuppe vergleichsweise gering, wohingegen die Reizung an der Handfläche vergleichsweise groß ist. Eine starke Reizung wird an der Fingerkuppe/Daumenkuppe hervorgerufen, wenn die Vorspannkraft vergleichsweise gering ist, wobei in Abhängigkeit der Druckkraft die Reizung an der Handfläche sich ergibt.

Bevorzugtermaßen ist der Übertragungsstift gebogen geformt. Bevorzugt ist ferner, dass der Übertragungsstift biegbar ist. Bevorzugt ist der Übertragungsstift im Gehäuse in einem Führungskanal längsgeführt, so dass, da der Übertragungsstift gebogen geformt ist, eine konstruktiv einfache Überbrückung des Gehäuses durch den Übertragungsstift ermöglicht ist.

Es ist bevorzugt, dass das Handgerät für jeden der vier Finger jeweils eine der Eingabetasten und für den Daumen eine zusätzliche Eingabetaste aufweist, die als eine Multifunktionstaste ausgebildet ist, mit der verschiedene Funktionalitäten der Eingabetasten für die Finger schaltbar sind. Ist die Multifunktionstaste beispielsweise auf sieben Schaltniveaus schaltbar, können mit den vier Eingabetasten maximal 28 verschiedene Zeichen abgebildet werden. Dadurch wäre beispielsweise das Alphabet mit den vier Eingabetasten und der Multifunktionstaste abzubilden.

Die Datenverarbeitungseinheit weist bevorzugt einen Speicher auf, mit dem die mit den Eingabetasten eingegebenen Daten speicherbar sind. Ist mit den vier Eingabetasten und der Multifunktionstaste das Alphabet abgebildet, kann das Handgerät für eine Texteingabe verwendet werden. Bei entsprechendem Auswählen einer der sieben Schaltniveaus der Multifunktionstaste und dem kombinierten Drücken einer passenden der vier Eingabetasten kann ein Buchstabe aus dem Alphabet eingegeben und im Speicher abgespeichert werden. Hält die Person das Handgerät in der Hand und ist die Hand beispielsweise in eine Hosentasche gesteckt, so kann mit dem Handgerät unauffällig die Texteingabe erfolgen. Zu einem späteren Zeitpunkt und gegebenenfalls an einem anderen Ort kann der Speicher beispielsweise mit einem Computer ausgelesen werden, wodurch der bei der Texteingabe entstandene Text zugänglich gemacht wird.

Das erfindungsgemäße Handgerät ist ein Fernbedienungsgerät zum Fernbedienen eines Apparats, ein Mobiltelefon oder ein Spielgerät. Die therapierende Wirkung durch die Handreflexzonenmassage des Handgeräts bei der Dateneingabe entfaltet sich erfindungsgemäß bei der Handhabung des Fernbedienungsgeräts, des Mobiltelefons und des Spielgeräts. Andere Anwendungen des Handgeräts zur Dateneingabe sind denkbar.

Im Folgenden werden bevorzugte Ausführungsformen des erfindungsgemäßen Handgeräts anhand der beigefügten schematischen Zeichnungen erläutert. Es zeigen:
Figur 1 eine perspektivische Darstellung einer ersten Ausführungsform des Handgeräts, das in einer rechten Hand gehalten ist,
Figur 2 eine perspektivische Darstellung der Ausführungsform aus Figur 1,
Figur 3 eine Schnittdarstellung einer zweiten Ausführungsform des Handgeräts,
Figur 4 eine Schnittdarstellung einer dritten Ausführungsform des Handgeräts, und
Figur 5 eine rechte Hand mit Markierungen von Reflexzonen.

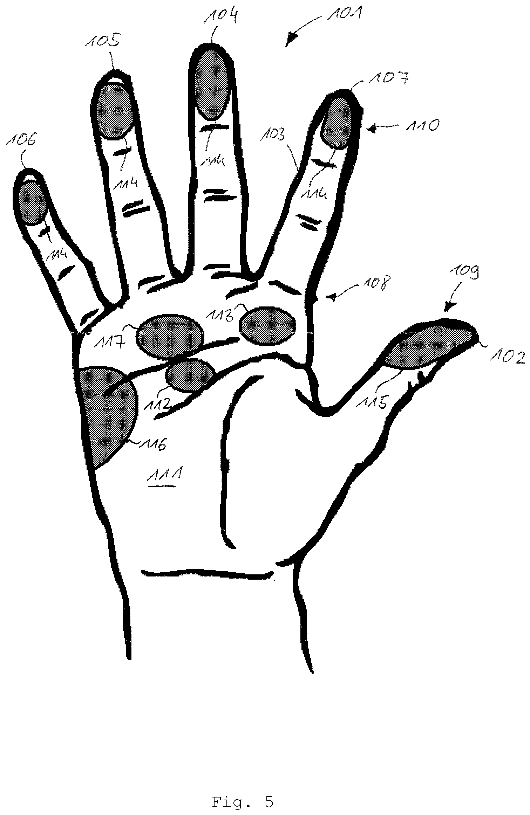

Figur 5 zeigt die Draufsicht der Innenseite einer menschlichen rechten Hand 101. Die Hand 101 weist einen Daumen 102, einen Zeigefinger 103, einen Mittelfinger 104, einen Ringfinger 105 und einen kleinen Finger 106 auf. Die Finger 103 bis 106 weisen jeweils an ihren freiliegenden Längsenden eine Fingerspitze 107 auf, wobei die Finger 103 bis 106 an der Hand 101 jeweils mit einer Fingerwurzel 108 an einer Handfläche 101 gelenkig sind. An den Fingerspitzen 107 ist jeweils eine Fingerkuppe 110 angeordnet, wohingegen der Daumen 102 eine Daumenkuppe 109 aufweist.

An den Fingerkuppen 110 sind jeweils Reflexzonen 114 für Stirn- und Kopfhöhlen angesiedelt. Auf der Handfläche 101 sind im Bereich des kleinen Fingers 106 eine Reflexzone 116 für die Leber, im Bereich des Mittelfingers 104 und des Ringfingers 105 eine Reflexzone 117 für die Lunge und eine Reflexzone für den Solarplexus 112 und im Bereich des Zeigefingers 103 eine Reflexzone für den Magen angesiedelt.

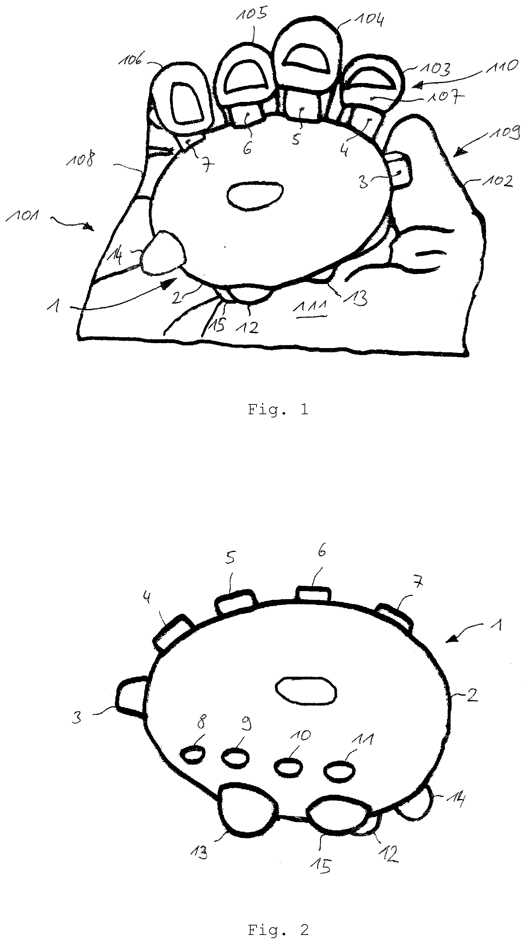

Wie es aus Figuren 1 bis 4 ersichtlich ist, weist ein Handgerät 1 ein Gehäuse 2 auf, das eine Eingabetaste 3 für den Daumen 102, eine Eingabetaste 4 für den Zeigefinger 103, eine Eingabetaste 4 für den Mittelfinger 104, eine Eingabetaste 6 für den Ringfinger 105 und eine Eingabetaste 7 für den kleinen Finger 106 aufweist. Ferner weist das Handgerät 1 eine Orientierungsnoppe 8 für die Wurzel des Zeigefingers 103, eine Orientierungsnoppe 9 für die Wurzel des Mittelfingers 104, eine Orientierungsnoppe 10 für die Wurzel des Ringfingers 105 und eine Orientierungsnoppe 11 für die Wurzel des kleinen Fingers 106 auf. Außerdem weist das Handgerät 1 einen Reizvorsprung 12, für die Reflexzone 112 für den Solarplexus, einen Reizvorsprung 13, für die Reflexzone 113 für den Magen, einen Reizvorsprung 14 für die Reflexzone 116 für die Leber und einen Reizvorsprung 15 für die Reflexzone 117 für die Lunge auf.

Die Eingabetasten 3 bis 7 sind als Drucktasten ausgebildet. Als vom Gehäuse 2 vorstehende und feste Vorsprünge sind die Orientierungsnoppen 8 bis 11 und die Reizvorsprünge 12 bis 15 ausgebildet. Das Gehäuse 2 ist zum Halten in der Hand 101 ergonomisch in der Art eines Handschmeichlers geformt und hat die Größe etwa eines Hühnereis.

Beim Halten des Handgeräts 1 in der Hand 101 stehen die Orientierungsnoppen 8 bis 11 mit der Hand 101 mit ihren jeweiligen Fingerwurzeln 108 in Eingriff, so dass das Handgerät 1 von der Hand 101 mit den Fingern 102 bis 106 und der Handfläche 111 gut greifbar ist. Die Eingabetasten 3 bis 7 sind relativ zu den Orientierungsnoppen 8 bis 11 am Gehäuse derart angeordnet, dass die Eingabetasten 3 bis 7 bequem von den ihnen zugeordneten Fingern 103 bis 106 bzw. dem Daumen 102 mit ihren jeweiligen Fingerkuppen 110 bzw. der Daumenkuppe 109 gedrückt werden können. Die Reizvorsprünge 12 bis 15 sind relativ zu den Orientierungsnoppen 8 bis 11 am Gehäuse 2 derart angeordnet, dass, wenn das Handgerät 1 in der Hand 101 gehalten ist, der Reizvorsprung 12 die Reflexzone 112 für den Solarplexus, der Reizvorsprung 13 die Reflexzone 113 für den Magen, der Reizvorsprung 14 die Reflexzone 114 für die Leber und der Reizvorsprung 15 die Reflexzone 115 für die Lunge berührt.

In Figuren 1 und 2 ist eine erste Ausführungsform des Handgeräts 1 gezeigt, bei der die Reizvorsprünge 12 bis 15 als lokale Erhebungen am Gehäuse 2 ausgebildet sind. Die Eingabetasten 3 bis 7 sind als Drucktasten ausgebildet.

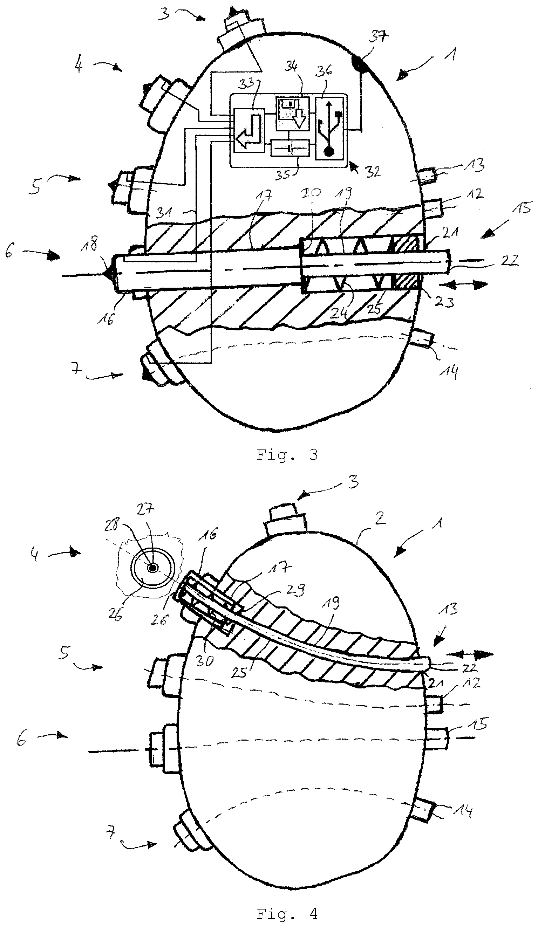

In Figur 3 ist eine zweite Ausführungsform des Handgeräts 1 gezeigt. Die Ausgestaltung der Eingabetasten 3 bis 7 ist beispielhaft an der Eingabetaste 6 für den Ringfinger 105 gezeigt. Die Eingabetaste 6 weist einen Tastenkopf 16 auf, der zylinderartig ausgebildet ist und in einem entsprechenden Führungsschaft 17 im Gehäuse längsverschiebbar gelagert ist. Der Führungsschaft 17 ist im Gehäuse 2 derart orientiert, dass, wenn mit dem Ringfinger 105 der Tastenkopf 16 gedrückt wird, der Tastenkopf 16 im Führungsschaft 17 längsverschoben wird. Der Tastenkopf 16 ist von außerhalb des Gehäuses 2 durch den Ringfinger 105 dadurch zugänglich, dass der Tastenkopf 16 mit seinem einen Längsende aus dem Führungsschaft 17 vorsteht und dadurch vom Gehäuse 2 absteht. Am äußeren Endes des Tastenkopfs 16 ist eine Reizspitze 18 vorgesehen, die beim Drücken der Eingabetaste 6 von der Fingerkuppe 110 des Ringfingers 105 berührt wird. Dadurch wird die Reflexzone 114 für die Stirn- und Kopfhöhlen am Ringfinger 105 stimuliert.

Am der Reizspitze 17 abgewandten Längsende des Tastenkopfs 16 ist ein Übertragungsstift 19 befestigt, der mit dem Tastenkopf 16 fluchtet und bis zu einer Gehäuseöffnung 21 des Gehäuses 2 sich erstreckt, wobei der Tastenkopf 16 zusammen mit dem Übertragungsstift 19 das Gehäuse 2 vollständig durchdringt. Dadurch, dass der Tastenkopf 16 im Durchmesser größer ausgebildet ist als der Übertragungsstift 19, ist am Übergang vom Tastenkopf 16 zum Übertragungsstift 19 eine Stufe 20 ausgebildet.

Der Übertragungsstift 19 erstreckt sich insbesondere beim Gedrücktsein der Eingabetaste 6 mit seinem Längsende 22, das dem Tastenkopf 16 abgewandt ist, durch die Gehäuseöffnung 21. Dieses Längsende 22 steht vom Gehäuse 2 ab und bildet den Reizvorsprung 16 für die Reflexzone 115 für die Lunge. Die Gehäuseöffnung 21 ist in einer Lochscheibe 23 ausgebildet, die in dem Gehäuse 2 konzentrisch um den Übertragungsstift 19 angeordnet ist. Dadurch korrespondiert die Lochscheibe 23 mit der Stufe 20, wobei an der Stufe 20 und an der Lochscheibe 23 eine erste Rückstellfeder 24 abgestützt und um den Übertragungsstift 1 angeordnet ist. Die Federkraft der Rückstellfeder 24 ist der Druckkraft beim Drücken der Eingabetaste 6 entgegengerichtet.

Beim Drücken der Eingabetaste 6 mit dem Ringfinger 105 berührt die Fingerkuppe 110 des Ringfingers 105 die Reizspitze 18. Durch das Überwinden der Federkraft der Rückstellfeder 24 verschiebt sich der Tastenkopf 16 zusammen mit dem Übertragungsstift 19 im Führungsschaft 17, so dass der Tastenkopf 16 im Führungsschaft 17 immer mehr versenkt und das dem Tastenkopf 16 abgewandte Längsende 22 des Übertragungsstifts 19 immer mehr aus der Gehäuseöffnung 21 vorsteht. Da dieses Längsende 22 auf die Handfläche 111 und somit auf die Reflexzone 117 für die Lunge drückt, wirkt von der Handfläche 11 eine Gegenkraft auf den Übertragungsstift 19 und dem Tastenkopf 16, die entgegen der Druckkraft vom Ringfinger 105 gerichtet ist. Somit ergibt sich die Kraft, mit der das Längsende 22 des Übertragungsstifts 19 auf die Reflexzone 117 für die Lunge drückt, als die vom Ringfinger 105 auf die Reizspitze 18 ausgeübte Druckkraft reduziert um die Rückstellkraft der Rückstellfeder 24. Daraus resultiert eine Reizung der betroffenen Reflexzonen 114 und 117, die die zugeordneten Körperteile derart stimulieren soll, dass sich eine Entspannung, eine Schmerzlinderung oder eine Krankheitsheilung einstellen kann.

In Figur 4 ist eine dritte Ausführungsform des Handgeräts 1 gezeigt, wobei beispielhaft der Aufbau der Eingabetaste 4 für den Zeigefinger 103 gezeigt ist. Gemäß dieser Ausführungsform weist das Gehäuse 2 einen Stiftkanal 25 auf, in dem der Übertragungsstift 19 längsverschiebbar gelagert ist, der sich vollständig durch das Gehäuse 2 erstreckt. Durch die Gehäuseöffnung 21 steht bei gedrückter Eingabetaste 4 das eine Längsende 22 des Übertragungsstifts 19 vor, um als Reizvorsprung 13 für die Reflexzone 113 für den Magen zu wirken.

Der Tastenkopf 16 ist konzentrisch um den Übertragungsstift 19 angeordnet, wobei der Tastenkopf 16 einen dem Gehäuse 2 abgewandten Tastenkopfdeckel 26 aufweist. In dem Tastenkopfdeckel 26 ist eine Tastenkopföffnung 27 vorgesehen, durch die das andere Längsende des Übertragungsstifts 19, das der Gehäuseöffnung abgewandt angeordnet ist, erstreckbar ist. Dadurch, dass im Führungsschaft 17 der Tastenkopf 16 untergebracht, der im Durchmesser größer ist als der Übertragungsstift 19, und der Übertragungsstift 19 im Stiftkanal 25 angeordnet ist, ist der Übergang vom Stiftkanal 95 zum Führungsschaft 17 stufenförmig ausgebildet, wodurch ein Grund 29 vorhanden ist. Eine zweite Rückstellfeder 30 ist am Grund 29 und an der Innenseite des Tastenkopfdeckels 26 abgestützt, so dass von der Rückstellfeder 30 eine Rückstellkraft in eine Nichtgedrücktstellung der Eingabetaste 4 auf den Tastenkopf 16 ausgeübt ist.

Der Tastenkopf 16 und der Übertragungsstift 19 sind zueinander frei verschiebbar. Beim Drücken der Eingabetaste 4 mit der Fingerkuppe 110 des Zeigefingers 103 wird der Tastenkopf 16 in den Führungsschaft 17 hinein verschoben, wobei der Übertragungsstift 19 mit seinem Längsende 28 durch die Tastenkopföffnung 27 sich erstreckt und vom Tastenkopfdeckel 26 vorsteht. Somit wird die Reflexzone 114 an der Fingerkuppe 110 des Zeigefingers 103 gereizt. Dadurch, dass mit der Fingerkuppe 110 des Zeigefingers 103 auf das Längsende 28 des Übertragungsstifts 19 gedrückt wird, verschiebt sich der Übertragungsstift 19 im Stiftkanal 25, so dass das andere Längsende 22 des Übertragungsstifts 19 aus der Gehäuseöffnung 21 immer mehr ausgefahren und die Reflexzone 113 für den Magen gereizt wird. In Abhängigkeit der Kennlinie der Rückstellfeder 30, der Überstände des Übertragungsstifts 19 an seinen Längsenden 22 und 28 sowie der Reibung zwischen dem Übertragungsstift 19 und dem Stiftkanal 25 und/oder dem Tastenkopf 16 und dem Führungsschaft 17 ist der Grad der Reizung der Reflexzone 114 an der Fingerkuppe und der Reflexzone 113 auf der Handfläche 111 einstellbar.

Die beschriebenen Ausführungsformen der Eingabetasten 3 bis 7 und andere Ausführungen sind im Handgerät 1 als beliebig kombinierbar denkbar.

In jeder der Ausführungen des Handgeräts 1 sind die Eingabetasten 3 bis 7 via Signalleitungen 31 mit einer Datenverarbeitungseinheit 32 verschaltet. Mit Hilfe der Datenverarbeitungseinheit 32 werden die mit den Eingabetasten 3 bis 7 eingegebenen Daten verarbeitet. Hierzu weist die Datenverarbeitungseinheit 32 eine Eingabeeinheit 33, mit der die Dateneingabe gesteuert wird, und einen Speicher 34 auf, mit dem die eingegebenen Daten gespeichert werden. Zum Betrieb der Datenverarbeitungseinheit 32 weist diese eine Batterie 35 zur Stromversorgung auf. Ferner weist die Datenverarbeitungseinheit 32 eine Ausgabeeinheit 36 auf, mit der via einen Ausgabeanschluss 37 die im Speicher 34 gespeicherten Daten zu externen Geräte ausgelesen werden können.

Die Eingabetaste 3 ist als eine Multifunktionstaste ausgebildet, mit der sieben Stellungen mit dem Daumen 102 schaltbar sind. Die Eingabeeinheit 32 ist derart eingerichtet, dass in Abhängigkeit der jeweiligen Stellung der Eingabetaste 3 den Eingabetasten 4 bis 7 Gruppen von Buchstaben des Alphabets zugeordnet werden. In derartiger Konfiguration dient das Handgerät 1 als Texteingabegerät, wobei mit den Fingern 103 bis 106 den Eingabetasten 4 bis 7 entsprechend der Betätigung der Eingabetaste mit dem Daumen 102 Texte eingegeben werden können, die in der Speichereinheit 34 gespeichert und mit der Ausgabeeinheit 36 via den Ausgabeanschluss 37 wieder ausgelesen werden können. Zum Ausgeben der Daten kann die Ausgabeeinheit 36 ferner ein Wlan-Modul aufweisen, mit dem via Internet die Daten ausgelesen werden können.

Denkbar ist es auch, dass das Handgerät 1 mit seiner Anordnung an den Eingabetasten 3 bis 7 derart symmetrisch aufgebaut ist, dass das Handgerät 1 beidhändig unter der Stimulation der relevanten Reflexzonen 112 bis 117 bedienbar ist, wodurch das Handgerät 1 beidhändig anwendbar ist, also gleichwertig sowohl von der rechten Hand als auch von der linken Hand gehalten und bedient werden kann und dabei das Handgerät 1 sowohl für einen Rechtshänder als auch für einen Linkshänder geeignet ist.

### Bezugszeichenliste

- 1: Handgerät
- 2: Gehäuse
- 3: Eingabetaste für den Daumen
- 4: Eingabetaste für den Zeigefinger
- 5: Eingabetaste für den Mittelfinger
- 6: Eingabetaste für den Ringfinger
- 7: Eingabetaste für den kleinen Finger
- 8: Orientierungsnoppe für die Wurzel des Zeigefingers
- 9: Orientierungsnoppe für die Wurzel des Mittelfingers
- 10: Orientierungsnoppe für die Wurzel des Rinngfingers
- 11: Orientierungsnoppe für die Wurzel des kleinen Fingers
- 12: Reizvorsprung für Reflexzone für Solarplexus
- 13: Reizvorsprung für Reflexzone für Magen
- 14: Reizvorsprung für Reflexzone für Leber
- 15: Reizvorsprung für Reflexzone für Lunge
- 16: Tastenkopf
- 17: Führungsschaft
- 18: Reizspitze
- 19: Übertragungsstift
- 20: Stufe
- 21: Gehäuseöffnung
- 22: erstes Längsende des Übertragungsstifts
- 23: Lochscheibe
- 24: erste Rückstellfeder
- 25: Stiftkanal
- 26: Tastenkopfdeckel
- 27: Tastenkopföffnung
- 28: zweites Längsende des Übertragungsstifts
- 29: Grund
- 30: zweite Rückstellfeder
- 31: Signalleitung
- 32: Datenverarbeitungseinheit
- 33: Eingabeeinheit
- 34: Speicher
- 35: Batterie
- 36: Ausgabeeinheit
- 37: Ausgabeanschluss
- 101: Hand
- 102: Daumen
- 103: Zeigefinger
- 104: Mittelfinger
- 105: Ringfinger
- 106: Kleiner Finger
- 107: Fingerspitze
- 108: Fingerwurzel
- 109: Daumenkuppe
- 110: Fingerkuppe
- 111: Handfläche
- 112: Reflexzone für Solarplexus
- 113: Reflexzone für Magen
- 114: Reflexzonen für Stirn- und Kopfhöhlen
- 115: Reflexzone für Gehirn
- 116: Reflexzone für Leber
- 117: Reflexzone für Lunge

## Patentansprüche

1. Handgerät zur Dateneingabe, mit einer Datenverarbeitungseinheit (32) und einem Gehäuse (2), das ergonomisch zum in einer Hand (101) Halten in der Art eines Handschmeichlers an die Hand (101) angepasst geformt ist, sowie mindestens einer Eingabetaste (3 bis 7), die mit der Datenverarbeitungseinheit (32) zur Verarbeitung der Dateneingabe durch die Eingabetaste (3 bis 7) gekoppelt ist und derart an dem Gehäuse (2) angeordnet ist, dass, wenn das Handgerät (1) in der Hand (101) gehalten ist, von mindestens einem der vier Finger (103 bis 106) oder dem Daumen (102) der Hand (101) die Eingabetaste (4 bis 7) zur Dateneingabe drückbar und dadurch eine Druckkraft von dem Finger (103 bis 106) oder dem Daumen (3) via das Handgerät (1) auf die Handfläche (111) übertragbar ist, **dadurch gekennzeichnet, dass** eine Oberflächenstelle des Gehäuses (2), die der Eingabetaste (4 bis 7) abgewandt angeordnet ist und zu der, wenn das Handgerät (1) in der Hand (101) gehalten ist, unmittelbar benachbart mindestens eine der Reflexzonen (112 bis 117) der Handfläche (111) angeordnet ist, mit mindestens einem von der Oberflächenstelle vorstehenden Reizvorsprung (12 bis 15) versehen ist, so dass vom Drücken der Eingabetaste (4 bis 7) via den Reizvorsprung (12 bis 15) Nervenendpunkte der Reflexzone (112 bis 117) reizbar sind, wodurch der der Reflexzone (112 bis 117) zugeordnete Körperteil während der Dateneingabe stimuliert ist, **dadurch gekennzeichnet, dass** das Gehäuse (2) in der Oberflächenstelle eine Gehäuseöffnung (21) und das Handgerät (1) einen verschiebbar gelagerten Übertragungsstift (19) aufweist, der mit der Eingabetaste (3 bis 7) gekuppelt ist, dass, wenn die Eingabetaste (3 bis 7) gedrückt ist, der Übertragungsstift (19) mit seinem einen Längsende (22) durch die Gehäuseöffnung (21) sich erstreckt und von der Oberflächenstelle vorsteht, wodurch das Längsende (22) den Reizvorsprung (12 bis 15) bildet.

2. Handgerät gemäß Anspruch 1, wobei das Gehäuse (2) mindestens eine einer der Wurzeln (108), an denen die Finger (103 bis 106) an der Handfläche (111) gelenkig sind, der Finger (103 bis 106) zugeordnete Orientierungsnoppe (9 bis 11) aufweist, die derart angeordnet ist, dass, wenn das Handgerät (1) in der in der Hand (101) gehalten ist, die Orientierungsnoppe (9 bis 11) mit ihrer zugeordneten Wurzel (108) in Eingriff steht und der Reizvorsprung (12 bis 15) mit der ihm zugeordneten Reflexzone (112 bis 117) in Berührkontakt bringbar und die Eingabetaste (3 bis 7) von dem ihr zugeordneten Finger (103 bis 106) / Daumen (102) drückbar ist.

3. Handgerät gemäß Anspruch 1 oder 2, wobei mit der Fingerkuppe (110) / Daumenkuppe (109) des der Eingabetaste zugeordneten Fingers (103 bis 106) / Daumens (102)die Eingabetaste drückbar ist.

4. Handgerät gemäß einem der Ansprüche 1 bis 3, wobei der Übertragungsstift (19) derart dimensioniert, gelagert und mit der Eingabetaste (3 bis 7) gekuppelt ist, dass, wenn die Eingabetaste (3 bis 7) nicht gedrückt ist, das Längsende (22) des Übertragungsstifts (19) in der Gehäuseöffnung (21) versenkt ist.

5. Handgerät gemäß einem der Ansprüche 1 bis 4, wobei die Eingabetaste (3 bis 7) einen verschiebbaren Tastenkopf (16) zum Drücken der Eingabetaste (3 bis 7) aufweist, der in Verlängerung zum Übertragungsstift (19) an diesem befestigt ist, so dass der Tastenkopf (16) zusammen mit dem Übertragungsstift (19) das Gehäuse (2) vollständig durchdringt.

6. Handgerät gemäß Anspruch 5, wobei der Tastenkopf (16) eine Reitzspitze (18) aufwest, die vom Gehäuse (2) absteht, wodurch der Finger (103 bis 106) / Daumen (103) beim Drücken der Eingabetaste (3 bis 7) gereizt ist.

7. Handgerät gemäß einem der Ansprüche 1 bis 4, wobei die Eingabetaste (3 bis 7) einen verschiebbaren Tastenkopf (16) zum Drücken der Eingabetaste (3 bis 7) aufweist und der Übertragungsstift (19) das Gehäuse (2) vollständig durchdringt sowie im Tastenkopf (16) sich erstreckt, so dass, wenn die Eingabetaste (3 bis 7) gedrückt ist, das Längsende (28) des Übertragungsstifts (19), das der Gehäuseöffnung (21) abgewandt angeordnet ist, durch eine Tastenkopföffnung (27) des Tastenkopfs (16) sich erstreckt und von dem Tastenkopf (16) vorsteht, wodurch der Finger (103 bis 106) / Daumen (102) beim Drücken der Eingabetaste (3 bis 7) gereizt ist.

8. Handgerät gemäß einem der Ansprüche 5 bis 7, wobei das Handgerät (1) ein Vorspannmittel (24, 30) aufweist, das am Tastenkopf (16) angreift und mit seiner der Druckkraft entgegenwirkenden Vorspannkraft den Tastenkopf (16) in dessen Nichtgedrücktstellung treibt, wobei das Vorspannmittel (24, 30) derart dimensioniert ist, dass die Vorspannkraft zu derjenigen Größe der Druckkraft führt, dass der der Reflexzone (112 bis 117) zugeordnete Körperteil während der Dateneingabe zur Entspannung, Schmerzlinderung oder Krankheitsheilung stimuliert ist.

9. Handgerät gemäß einem der Ansprüche 1 bis 8, wobei der Übertragungsstift (19) gebogen geformt ist.

10. Handgerät gemäß einem der Ansprüche 1 bis 9, wobei das Handgerät (1) für jeden der vier Finger (103 bis 106) jeweils eine der Eingabetasten (4 bis 7) und für den Daumen (102) eine zusätzliche Eingabetaste (3) aufweist, die als eine Multifunktionstaste ausgebildet ist, mit der verschiedene Funktionalitäten der Eingabetasten (4 bis 7) für die Finger (103 bis 106) schaltbar sind.

11. Handgerät gemäß einem der Ansprüche 1 bis 10, wobei die Datenverarbeitungseinheit (32) einen Speicher (34) aufweist, mit dem die mit den Eingabetasten (3 bis 7) eingegeben Daten speicherbar sind.

12. Fernbedienungsgerät zum Fernbedienen eines Apparats, mit einem Handgerät (1) gemäß einem der Ansprüche 1 bis 11.

13. Mobiltelefon mit einem Handgerät (1) gemäß einem der Ansprüche 1 bis 11.

14. Spielgerät mit einem Handgerät (1) gemäß einem der Ansprüche 1 bis 11.

## Claims

1. Handheld device for data input, with a data processing unit (32) and a casing (2) that is shaped adapted to the hand (101) for holding in a hand (101) ergonomically in the manner of a palm stone as well as with at least one input key (3 to 7) that is coupled with the data processing unit (32) for processing of the data input by the input key (3 to 7) and arranged at the casing (2) such that, when the handheld device (1) is held in the hand (101), the input key (4 to 7) can be pressed for the data input by at least one of the four fingers (103 to 106) or the thumb (102) of the hand (101) and thereby, a compressive force is transferable from the finger (103-106) or the thumb (3) via the handheld device (1) to the palm of the hand (111), **characterized in that** a surface location of the casing (2), which is arranged averting away from the input key (4 to 7) and, when the handheld device (1) is held in the hand (101), at least one of the reflex zones (112 to 117) of the palm (111) is/are arranged directly adjacent to the surface location, wherein the casing (2) is provided with at least one stimulation protrusion (12 to 15) protruding from the surface location, so that nerve end points of the reflex zone (112 to 117) are stimulable via the stimulation protrusion (12 to 15) by pressing the input key (4 to 7), whereby the part of the body assigned to the reflex zone (112 to 117) is stimulated during the data input, **characterized in that** the casing (2) comprises a casing opening (21) in the surface location and the handheld device (1) comprises a displaceable supported propagation bolt (19) coupled with the input key (3 to 7) that, when the input key (3 to 7) is pressed, the propagation bolt (19) extends through the casing opening (21) with its one longitudinal end (22) and protrudes from the surface location, whereby the longitudinal end (22) forms the stimulation protrusion (12 to 15).

2. Handheld device according to claim 1, wherein the casing (2) comprises at least one orientation knob (9 to 11) assigned to one of the roots (108) of the fingers (103 to 106), wherein the fingers (103 to 106) at the palm (111) are flexible, wherein, when the handheld device (1) is held in the hand (101), the orientation knob (9 to 11) is in engagement with its assigned root (108) and the stimulation protrusion (12 to 15) can be brought in touch contact with its assigned reflex zone (112 to 117) and the input key (3 to 7) can be pressed by its assigned finger (103 to 106)/thumb (102).

3. Handheld device according to anyone of claims 1 to 2, wherein the input key can be pressed by the finger dome (110)/thumb dome (109) of the fingers (103 to 106)/thumbs (102) assigned to the input key.

4. Handheld device according to anyone of claims 1 to 3, wherein the propagation bolt (19) has such dimensions, is supported such and is coupled with the input key (3 to 7) such that, when the input key (3 to 7) is not pressed, the longitudinal end (22) of the propagation bolt (19) is countersunk in the casing opening (21).

5. Handheld device according to anyone of claims 1 to 4, wherein the input key (3 to 7) comprises a displaceable key head (16) for pressing the input key (3 to 7), which is fixed in extension on the propagation bolt (19), so that the key head (16) completely penetrates the casing (2) together with the propagation bolt (19).

6. Handheld device according to claim 5, wherein the key head (16) comprises a stimulation tip (18) that protrudes from the casing (2), whereby the finger (103 to 106)/thumb (103) is stimulated during pressing of the input key (3 to 7).

7. Handheld device according to anyone of claims 1 to 4, wherein the input key (3 to 7) comprises a displaceable key head (16) for pressing the input key (3 to 7) and the propagation bolt (19) completely penetrates the casing (2) as well as extends in the key head (16), so that, when the input key (3 to 7) is pressed, the longitudinal end (28) of the propagation bolt (19), which is arranged averting away from the casing opening (21), extends through a key head opening (27) of the key head (16) and protrudes from the key head (16), whereby the finger (103 to 106)/thumb (102) is stimulated during pressing of the input key (3 to 7).

8. Handheld device according to anyone of claims 5 to 7, wherein the handheld device (1) comprises a pretension means (24, 30) that grabs the key head (16) and drives the key head (16) in its unpressed position with its pretension force being directed against the compressive force, wherein the pretension means (24, 30) has such dimensions that the pretension force leads to such a strength of the compressive force that the part of the body assigned to the reflex zone (112 to 117) is stimulated for relaxation, pain relief or illness healing during the data input.

9. Handheld device according to anyone of claims 1 to 8, wherein the propagation bolt (19) is formed arcuately.

10. Handheld device according to anyone of claims 1 to 9, wherein the handheld device (1) comprises a respective input key (4 to 7) for each of the four fingers (103 to 106) and an additional input key (3) for the thumb (102), wherein the additional input key (3) is formed as a multifunctional key with which different functionalities of the input keys (4 to 7) for the fingers (103 to 106) can be switched.

11. Handheld device according to anyone of claims 1 to 10, wherein the data processing unit (32) comprises a memory (34) with which the data being input by the input keys (3 to 7) are storable.

12. Remote control device for remote controlling of an apparatus, wherein the remote control device (1) comprises a handheld device (1) according to anyone of claims 1 to 11.

13. Mobile telephone with a handheld device (1) according to anyone of claims 1 to 11.

14. Gaming device with a handheld device (1) according to anyone of claims 1 to 11.

## Revendications

1. Dispositif apte à être tenu à la main pour la saisie de données, ayant une unité de traitement de données (32) et un boîtier (2) qui est moulé ergonomiquement de manière à être tenu dans une main (101) à la façon d'un objet agréable au toucher au niveau de la main (101), ainsi qu'au moins une touche d'entrée (3 à 7) qui est reliée à l'unité de traitement de données (32) pour traiter l'entrée de données par la touche d'entrée (3 à 7), et agencé sur le boîtier (2) de telle sorte que lorsque le dispositif apte à être tenu à la main (1) est tenu à la main (101), les touches d'entrée (3 à 7) sont aptes à être pressées par au moins un des quatre doigts (103 à 106) ou le pouce (102) de la main (101) pour entrer des données, et ainsi une force de pression est apte à être transférée depuis les doigts (103 à 106) ou le pouce (3) à la paume (111) par le dispositif apte à être tenu à la main (1), **caractérisé par** un emplacement de la surface du boîtier (2) disposé à l'opposé des touches d'entrée (4 à 7) et, lorsque le dispositif apte à être tenu à la main (1) est tenu dans la main (101), est agencé de façon immédiatement adjacente, vers au moins une des zones réflexes (112 à 117) de la paume (111), avec au moins une saillie de stimulation (12 à 15) faisant saillie de l'emplacement de la surface du boîtier (2) qui est disposée de sorte qu'en appuyant sur la touche d'entrée (4 à 7), des terminaisons nerveuses de la zone de réflexologie (112 à 117) sont aptes à être stimulées par la saillie de stimulation (12 à 15), les zones réflexes (112 à 117) affectées à la partie du corps étant stimulées lors de la saisie de données, **caractérisé en ce que** le boîtier (2), dans l'emplacement de la surface présente une ouverture de logement (21) et le dispositif apte à être tenu à la main (1) comprend une tige de transmission (19) montée mobile, qui est reliée aux touches d'entrée (3 à 7), de sorte que, lorsque la touche d'entrée (3 à 7) est pressée, la tige de transmission (19) s'étend à travers l'ouverture de boîtier (21) par une extrémité longitudinale (22) et fait saillie depuis l'emplacement de la surface, de sorte que l'extrémité longitudinale (22) forme la saillie de stimulation (12 à 15).

2. Dispositif apte à être tenu à la main selon la revendication 1, dans lequel le boîtier (2) présente, au niveau d'au moins l'une des racines (108) par lesquelles lesdits doigts (103 à 106) sont articulés à la paume (111), des boutons d'orientation (9 à 11) associés aux doigts (103 à 106), qui sont agencés de telle sorte que, lorsque le dispositif apte à être tenu à la main (1) est tenu dans la dans la main (101), les boutons d'orientation (9 à 11) soient en engagement avec les racines (108) associées et la saillie de stimulation (12 à 15) soit apte à venir en contact avec la zone réflexe (112 à 117) associée, en contact par effleurement et la touche d'entrée (3 à 7) soit pressée par son doigt (103 à 106) / pouce (102) associé.

3. Dispositif apte à être tenu à la main selon la revendication 1 ou la revendication 2, dans lequel le bout du doigt (110) / le bout du pouce (109) saisit et presse la touche d'entrée associée au doigt (103 à 106) / au pouce (102).

4. Dispositif apte à être tenu à la main selon l'une quelconque des revendications 1 à 3, dans lequel la tige de transmission (19) est dimensionnée pour être stockée et est couplée à la touche d'entrée (3 à 7), de sorte que, lorsque la touche d'entrée (3 à 7) n'est pas pressée, l'extrémité longitudinale (22) de la tige de transmission (19) est enfoncée dans l'ouverture de boîtier (21).

5. Dispositif apte à être tenu à la main selon l'une des revendications 1 à 4, dans lequel la touche d'entrée (3 à 7) comprend une partie supérieure de touche (16) mobile, permettant de presser la touche d'entrée (3 à 7), qui est fixée à la tige de transmission (19), dans le prolongement de celle-ci, de sorte que la partie supérieure de touche (16) pénètre complètement dans le boîtier (2), avec la tige de transmission (19).

6. Dispositif apte à être tenu à la main selon la revendication 5, dans lequel la partie supérieure de touche (16) présente une pointe (18) faisant saillie du boîtier (2), de sorte que le doigt (103 à 106) / le pouce (103) est stimulé lorsqu'il appuie sur la touche d'entrée (3 à 7).

7. Dispositif apte à être tenu à la main selon l'une des revendications 1 à 4, dans lequel la touche d'entrée (3 à 7) comporte une partie supérieure de touche (16) mobile pour appuyer sur la touche d'entrée (3 à 7) et la tige de transmission (19) pénètre entièrement dans le boîtier (2), et s'étend dans la partie supérieure de touche (16), de sorte que, lorsque la touche d'entrée est de (3 à 7) est pressée, l'extrémité longitudinale (28) de la tige de transmission (19), qui est disposée à l'opposé de l'ouverture de boîtier (21), s'étend à travers une ouverture (27) de la partie supérieure de touche (16) et fait saillie de la tête de touche (16), de sorte que les doigts (103 à 106) / le pouce (102) sont stimulés lorsque l'on appuie sur la touche d'entrée (3 à 7).

8. Dispositif apte à être tenu à la main selon l'une quelconque des revendications 5 à 7, dans lequel le dispositif apte à être tenu à la main (1) comprend un moyen de sollicitation (24, 30) qui coopère avec la partie supérieure de touche (16) et qui, au moyen de sa force de pression contrecarrant la force de rappel de la partie supérieure de touche (16), entraîne celle-ci dans sa position non enfoncée, les moyens de sollicitation (24, 30) étant dimensionnés de telle sorte que les résultats de la force de sollicitation, par l'intensité de la force de compression, stimule la zones réflexes (112 à 117) affectées à la partie du corps lors de la saisie de données pour une relaxation, le soulagement d'une douleur ou pour guérir une maladie.

9. Dispositif apte à être tenu à la main selon l'une quelconque des revendications 1 à 8, dans lequel la tige de transmission (19) est de forme arquée.

10. Dispositif apte à être tenu à la main selon l'une quelconque des revendications 1 à 9, dans lequel le dispositif apte à être tenu à la main (1), comprend une touche d'entrée (4-7) pour chacun des quatre doigts (103 à 106) de chacune des touches d'entrée et une touche d'entrée supplémentaire (3) pour le pouce (102), qui est conçue comme un bouton multifonction, les différentes fonctionnalités des touches d'entrée (4-7) étant commutables pour les doigts (103 à 106).

11. Dispositif apte à être tenu à la main selon l'une quelconque des revendications 1 à 10, dans lequel l'unité de traitement de données (32) comprend une mémoire (34) qui permet de mémoriser les données entrées avec les touches d'entrée (3 à 7).

12. Dispositif de commande à distance pour commander à distance un dispositif comprenant un dispositif apte à être tenu à la main (1) selon l'une quelconque des revendications 1 à 11.

13. Téléphone portable ayant un dispositif apte à être tenu à la main (1) selon l'une quelconque des revendications 1 à 11.

14. Dispositif de jeu avec un dispositif apte à être tenu à la main (1) selon l'une quelconque des revendications 1 à 11.
